# EUROPEAN PATENT SPECIFICATION

(11) **EP 1 246 481 B1**
(45) Date of publication and mention of the grant of the patent: **20.10.2004**
(21) Application number: 02076152.4
(22) Date of filing: 25.03.2002
(51) Int. Cl.: H04Q 7/22

(54) **System of reception, storage and forwarding of short messages (SMS)**
System zum Empfangen, Speichern und Weiterleiten von Kurznachrichten (SMS)
Système de réception, stockage et transfert de messages courts (SMS)

(30) Priority: 26.03.2001 ES 200100700
(43) Date of publication of application: 02.10.2002
(73) Proprietor: Vodafone Group PLC, Newbury Berkshire RG14 2FN (GB)
(72) Inventor: Bustillo Velasco, Jaime, 28109-Alcobendas, (Madrid) (ES); Molina Zamora, Fernando, 28003 Madrid (ES); Bragado Carrasco, Loreto, 28029 - Madrid (ES)
(74) Representative: Davila Baz, Angel

(56) References cited:
- EP-A- 0 989 763
- WO-A-98/32300
- WO-A-99/29125
- DE-A- 19 925 220
- GB-A- 2 290 675
- US-A- 5 878 347

## Description

### OBJECT OF THE INVENTION

The present invention, as is stated in the title piece to this specification, consists of a system of reception, storage and forwarding of short messages (SMS) that is applicable in the forwarding of short messages from an originating mobile terminal or from Internet via a web interface, over a mobile communications network, to another destination mobile terminal; and the object of which is to allow the termination of the short messages in a medium different to the destination mobile terminal, so that access is enabled from the latter to the SMS at any time, although the mobile telephony network is not forwarding them to it automatically, as takes place conventionally.

### BACKGROUND OF THE INVENTION

In the state of the art the forwarding of short messages over the GSM (global system for mobile) communications network or over the UMTS (universal mobile telecommunications service) network is well known, for which said network comprises a short message service centre (SMSC) by means of which SMS messages are sent from an originating mobile terminal or from Internet via a web interface, over the mobile communications network, to another destination mobile terminal, for which the SMSC receives the SMS message as well as the number of the destination mobile terminal (MSISDN - mobile subscriber ISDN), in order to request information on the destination mobile terminal from an HLR - home location register (a location data register of the mobile terminals). The access to the HLR is carried out through an STP node (network signalling transfer point), so that the HLR, starting from the MSISDN number of the destination terminal, obtains the IMSI - international mobile station identifier (international identification number of the destination mobile terminal) and the visitor location register (VLR), in which the destination mobile terminal is registered, so that said VLR registration indicates the area in which the destination mobile terminal is registered.

The HLR responds by forwarding these data obtained on the destination mobile terminal, to the SMSC, which transmits a command for forwarding the SMS message to the VLR pertaining to the data obtained, whereby the latter sends the SMS message to the destination mobile terminal. Once the SMS message is received in the destination mobile terminal, the latter acknowledges reception of the SMS message, and in the event of not being available at that moment, the SMSC receives the acknowledgement that the mobile terminal is not available, upon which it stores the SMS message for a previously established certain period of time, for their later automatic forwarding when the destination mobile terminal becomes available; provided the period of time established has not elapsed, since once said has concluded the SMS are erased.

At the present time the STP comprises an SRF (Specialized Resource Function) module that carries out functions at signalling level, to route the communication to the node that corresponds thereto, whereby subscribers that change network operator need not change their telephone number and the data request is routed to the subscriber's real HLR although it belongs to another network.

The structure described only allows the sending of short messages to a destination mobile terminal or an external application via the SMPP (short message point to point) protocol, depending in each case on the message destination number and deciding as to whether the message finishes in an external application or in a mobile destination.

If the short message can be delivered, no copy of it remains in any node of the network, being viewable only in the destination mobile terminal.

Also at any time, the destination mobile terminal could receive the message from a service centre different to that of its own network, such as a short message service centre of another national or foreign network.

In this case, when the messages are sent from an external network, that is to say an external service centre, the only way for the subscriber to receive the short message is through his terminal, provided agreements exist between the different companies of the different networks.

For the SMSC messages to reach an external application, each service centre that forwards the message has to be connected to said external application and must also have a special processing system for certain subscribers, to route the messages forwarded to these numbers to this external application, which is unviable.

Therefore, the only form for a subscriber to receive an SMS message from any SMSC, is through his terminal, since the terminating part of the SMS message transmittal only contemplates MAP (Mobile Application Part) procedures as has been explained above.

Consequently the user has no way to access his messages, if the network does not forward them to him automatically, nor does he any way of knowing if he has messages.

The only alternative to the users receiving the messages in their terminal, is that they receive them in an external application, and for this, as has been commented, it is necessary to have a system that distinguishes the subscriber numbers on which it has to apply forwarding to the external application.

As the messages are forwarded from a service centre that can be local or foreign, and the possible external application has to be connected with the server that forwards the message, it is impossible to have the service centres external to the user's network forward the short messages to an application, since all the external servers cannot be connected to the application.

Therefore, an important limitation exists in the current short message service system.

Also once the message in the SMSC has been erased, the possibility of recovering the SMS message does not exist on the part of the destination mobile terminal. Also while the network does not deliver the SMS messages automatically, the destination mobile terminal cannot have access to them in any form

US-A-5878347 discloses a system substantially in line with the preamble of claim 1 of the instant patent, in which a network node obtains, for incoming calls from mobile terminals that have been ported from a first HLR to a second HLR, the network address of the new HLR, from a centralised database.

DE-199 25 220-A1 discloses a system including a server having an interface function between SMS- and non-SMS networks. The system is capable of treating incoming messages in different ways, depending on the addresses of the sender and receiver of the messages.

### DESCRIPTION OF THE INVENTION

The invention relates to a system in accordance with claim 1. Preferred embodiments of the system are defined in the dependent claims.

To resolve the drawbacks mentioned above, the invention has developed a new system of storage and forwarding of short messages that is characterised in that the STP comprises means for storage and recognition of previously stored "special" mobile destination terminals, and in that independent means have also been foreseen for receiving SMS messages, which in turn comprise means for storage of a univocal identification equivalent to a VLR and an IMSI of each of the independent means of SMS reception, so that when an STP identifies that it does not concern a "special" destination mobile terminal, the conventional process of SMS forwarding is carried out as described in the section on "Background of the Invention", and so that when an STP identifies that the SMS message is addressed to one of the "special" mobile terminals, said STP requests the data on the destination mobile terminal from the independent means of SMS reception, which also comprises at least one processing module for forwarding its VLR and IMSI, as if it concerned an HLR, to the SMSC, so that the latter forward it the SMS message as if it were the VLR of the destination mobile terminal, so that the SMS message is stored in the independent means of SMS reception.

The invention is also characterised in that the processing module generates an acknowledgement of receiving an SMS message forwarded from the SMSC, to which it forwards said acknowledgement, so that the SMSC understands the process to be concluded as if the message had been delivered to the destination mobile terminal.

The system of the invention also comprises the possibility that, once the SMS message is stored, this message can be forwarded in an automatic way to the special destination mobile terminal, for which the STP has means for detection of a command made from the independent means of SMS reception to allow its access to an HLR from which it obtains, based on the MSISDN of the "special" destination mobile terminal its SMS and VLR in order to generate a command to forward the SMS message to the VLR obtained, which forwards the SMS message to said "special" destination mobile terminal.

The means for detection of a command made from the independent means of SMS reception of the STP, also comprises means for detection of a command made from the SMSC, to allow its access to an HLR or to the independent means of SMS reception and to allow thereby the performance of the functionalities described above.

Also the means for detection of a command made from the independent means of SMS reception, the means for detection of a command made from the SMSC and the means for storage and recognition of "special" destination mobile terminals of the STP, are determined by a module for obtaining the originating number and the destination number (MSISDN or IMSI), a consultation module that accesses a database from which is obtained, by means of an answer module, the destination address, which is delivered to a routing module that, by means of the obtained address, sets up the desired connection according to the different possibilities commented above.

The independent means of SMS reception also comprises means for storage of passwords associated with the MSISDN of each "special" destination mobile terminal and an electronic mail interface, to allow the user of this "special" destination mobile terminal to access the stored SMS message.

In an embodiment of the invention the access of the "special" destination mobile terminal to the stored SMS messages, is carried out from the mobile terminal itself by means of a data download protocol.

In another embodiment of the invention the access by the "special" destination mobile terminal to the stored SMS messages, is carried out from a processor fitted with an electronic mail protocol support interface.

This structure allows the mobile terminal user to consult at any time whether he has any SMS messages as well as their content.

The storage means for a univocal identification equivalent to a VLR and an IMSI and the means for storage of passwords associated with the MSISDN of each "special" destination mobile terminal of each of said independent means of SMS reception, are determined by at least one database, in which the SMS messages are also stored.

To allow the communications described previously, the independent means of SMS reception comprises an interface with the mobile telephony network to communicate with the SMSC, STP, or with the "special" destination mobile terminal.

The processing module of the independent means of reception is connected to the at least one database and to the interface of the mobile telephony network in order to set up the different communications through the mobile communications network and to store the SMS messages as well as the different data.

According to an embodiment of the invention, the possibility exists that the processing module carry out the encrypting of the SMS messages before they are forwarded, so that additional security is obtained in the forwarding of the SMS messages, in case this should be required in accordance with the application to which it is directed.

Next, to facilitate a better understanding of this specification and forming an integral part thereof, a series of figures is attached in which, by way of illustration and not restrictively, the object of the invention has been represented.

### BRIEF DESCRIPTION OF THE DRAWINGS

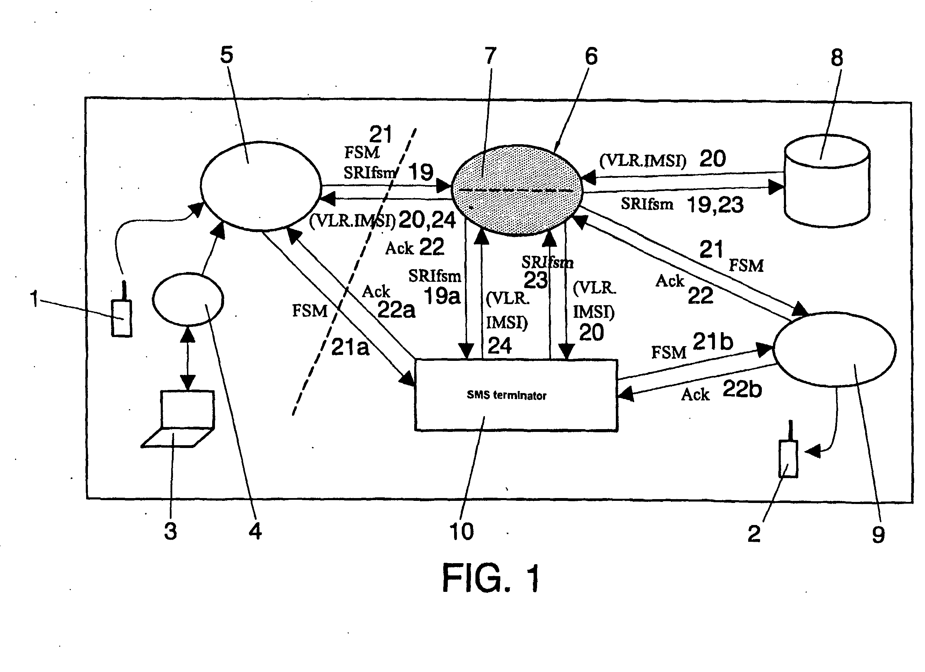

**Figure 1. -** It shows a functional block diagram of the general structure of the system of the invention.

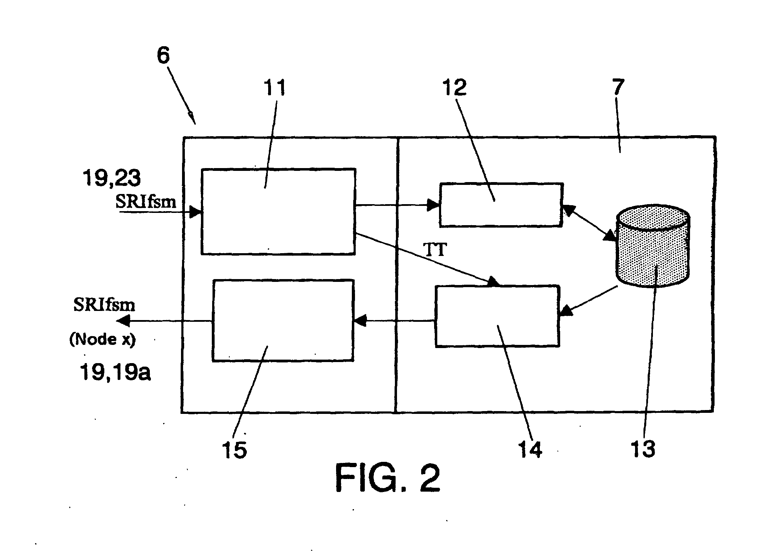

**Figure 2.** - It shows a functional block diagram of a possible example of embodiment of the STP according to the system of the invention.

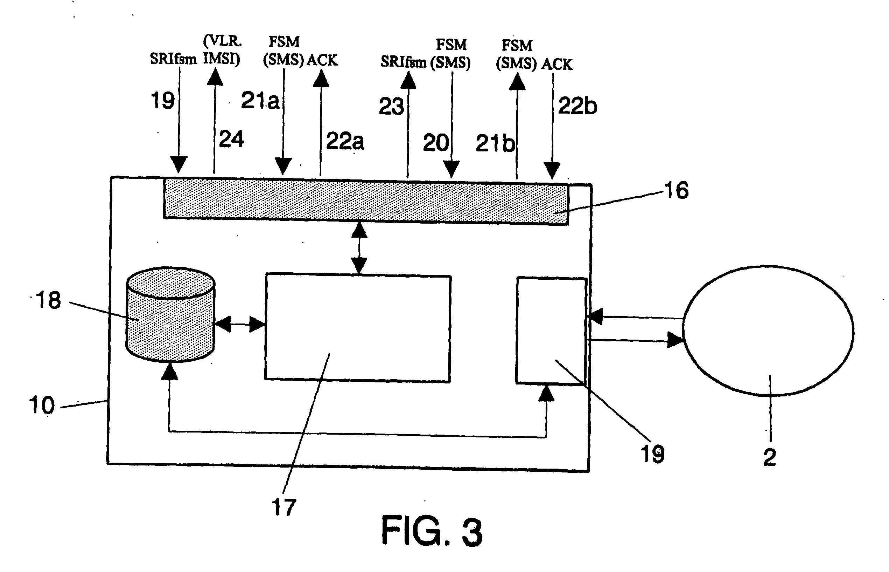

**Figure 3.** - It shows a functional block diagram of a possible example of embodiment of the independent means of SMS reception represented in Figure 1.

### DESCRIPTION OF THE PREFERRED EMBODIMENT

Next, a description of the invention is given based on the figures commented above.

It is well known that to send an SMS message from an originating mobile terminal 1, or from a processor 3 via Internet, by means of the pertinent web interface 4, to a destination mobile terminal 2, the mobile telephony communications network comprises a short message service centre 5 (SMSC) which receives the SMS message that includes the telephone number of the destination mobile terminal (MSISDN) based on which it requests information on the destination mobile terminal 2, for which it generates a command SRIfsm 19 (request for command to send routing information for short messages) which is forwarded to a mobile terminal location data register 8 (HLR) that passes through an STP 6 (network signalling transfer point) that passes this command to the HLR.

The HLR 8 is a database in which network user data are kept, such as their international identification (IMSI) of the destination mobile terminal, their MSISDN, and the VLR 9 (visitor location register) in which the destination mobile terminal is registered.

The VLR is a database in which is stored, together with other data, the location of each of the mobile terminals, so that every time a mobile terminal changes its location area, it is stored in the pertinent VLR, and based on this the user information that is present in the HLR is updated.

On receiving the SRlfsm 19 command, the HLR 8 responds with an item of information 20 in which the IMSI and the VLR 9 of the destination mobile terminal are indicated, this information being handled in a transparent mode through the STP 6 to the SMSC 5, which on receiving the data generates a command 21 to forward the short message (FSM) to the corresponding VLR 9, through the STP 6.

Next, the VLR 9 forwards the short message to the destination mobile terminal 2, and this responds with an acknowledgement message 22 (Ack) that is forwarded to the SMSC 5 through the STP 6.

In the event that the destination mobile terminal 2 is not operational and / or the acknowledgement message is not received, the VLR sends a message to the SMSC that the destination mobile terminal is not available and the short message is stored in the SMSC 5 for a previously programmed period of time, during which, when a VLR 9 detects that the destination mobile terminal 2 is operational, it is forwarded thereto in the manner already commented. If during the programmed period of SMS message storage time, in the SMSC, communication is not made with the destination mobile terminal, the SMS message is erased without the user of the destination mobile terminal finding out that he had a message.

To avoid this inconvenience, the invention has equipped the STP 6 with new functionalities, and has also foreseen the incorporation of an independent module of SMS reception 10, in which the SMS messages are stored as if dealing with a mobile terminal.

To achieve this functionality, it is necessary that the destination mobile terminal be a subscriber to the service, for which the STP 6 has a database 13 in which the different "special" destination mobile terminals are stored.

Said database 13 is connected to the STP, a node equipped with the SRF functionality, which makes use thereof to carry out its functions.

When the SMSC 5 verifies that the SRlfsm 19 command belongs to a "special" destination mobile terminal, the SRlfsm 19 command is sent to the module 10, which action is referred to with 19a. In the event that the destination mobile terminal is not a "special" destination mobile terminal, the process is carried out in the conventional way described above.

To carry out this functionality the STP 6 comprises a module for obtaining the originating number and the destination number 11 through which the command 19 is received. Also the module 11 obtains other specific data, as will be commented later.

The number obtained by the module 11 is forwarded to a subscriber type consultation module 12, which accesses the database 13 from which is obtained, through an answer module 14, the destination address to which the SRlfsm command should be sent, and communication is made with a routing module 15 that sets up the desired connection 19 or 19a by means of the address obtained.

. Regarding the independent SMS reception module 10, this has an interface 16 for connection with the mobile telephony network, through which it is possible to set up communication with the mobile telephony network, which in the specific example of embodiment consists of an MAP (mobile application part) interface that interprets and carries out the events associated with each of the commands sent over the network and that works using the number 7 signalling system conventionally employed.

The interface 16 is connected to a processing module 17 and the latter to a database 18, in which the short messages are stored with their associated data such as time, transmittal, origin and destination of the message, etc., as will be described below. It also comprises a memory in which an univocal identification is stored of each of the modules 10, which in the specific example of embodiment corresponds to a VLR and a "fictitious" IMSI of said module 10.

Thus, when the module 10 receives a command 19a, it responds by sending its VLR and its "fictitious" IMSI to the STP 6, which forwards it to the SMSC 5 that considers the VLR and the IMSI to belong to a mobile terminal, and the SMSC forwards a command FSM 21a to the module 10. The SMSC delivers the SMS message to the module 10 as if this were the VLR 9 of the destination mobile terminal, so that the module 10 stores the SMS message in the database 18, and answers the module 10 with the message received acknowledgement signal 22a (Ack), so that the SMSC 5 assumes the operation has concluded.

On detecting the signal 21 a, the processor 17 of the module 10 stores the short message in the database 18, and optionally, at some later moment may forward the message automatically to the "special" destination mobile terminal 2, in the manner described below.

The processor 17 identifies the originating and destination mobile terminal of the SMS message when this is received.

Subsequently the module 10 forwards a command SRlfsm 23 requesting the data of the "special" destination mobile terminal, so that the STP 6 detects that it is a command coming from the module 10 by the originating number, and forwards it to the HLR 8 from which it obtains, in the way already commented, the VLR and IMSI of the "special" destination mobile terminal and forwards these data to the module 10 which, after receiving these data generates a command 21b, for the VLR 9, to forward the short message to the "special" destination mobile terminal, which on receiving the message sends an SMS reception acknowledgement that is transmitted from the VLR 9 to the module 10 which has been referenced as 22b.

In the example of embodiment of the invention, in order that that the STP 6 carry out the appropriate addressing to send the different commands to the different modules, in each one of the cases described, it has been foreseen that the module 11, also detects the parameter TT (type of translation) of the SCCP (signalling connection control part) protocol that conventionally is used in the mobile telephony network the value of which can be modified freely, so that the module 11, according to the detection made of the parameter TT acts on the answer module 14, which obtains the appropriate address from the database 13, that is to say the addressing is made based on verifying to what type of terminal the SMS message is addressed and on the parameter TT, which is modified depending on the origin of the commands.

In this case the module 10 act as an SMSC 5 to request the data of the destination mobile terminal, whilst in the previous case it acts as a VLR.

Also, the module 10 comprises an electronic mail interface 19 that is connected to the database 18, so that access is allowed to the short messages stored on the part of the user of the "special" destination mobile terminal, either from his own terminal, for which the latter includes an interface that communicates via a data download protocol that allows this function to be carried out, or from a processor equipped with an electronic mail protocol support interface, like for example the SMTP (simple mail transfer protocol) which is an advanced protocol for forwarding and consulting electronic mail. Preferably the POP 3 (post office protocol) protocol is employed, which is a simple protocol for accessing electronic mail servers that allows electronic mail to be consulted from any machine, however unsophisticated it may be, merely by connecting to the mail server that also has an interface for POP 3.

To allow to the user of said "special" destination mobile terminal to access the stored SMS message through the electronic mail interface 19, the database 18 stores passwords associated with the MSISDN of each "special" destination mobile terminal.

The processor of the invention also allows automatic forwarding of the SMS messages to be carried out, as was described above, or on the contrary to keep them stored until the user accesses them, as required.

## Claims

1. System of reception, storage and forwarding of Short Message Service messages (SMS), which comprises a short message service centre (5) (SMSC) by means of which SMS messages are forwarded from an originating mobile terminal (1) or from Internet via a web interface (4), over a mobile communications network, to a destination mobile terminal (2);
the short message service centre (5) being arranged for requesting, via a network signalling transfer point (STP) node (6) and upon receipt of an SMS message together with a corresponding destination mobile terminal number (MSISDN) identifying a destination mobile terminal, first address information from a home location register (HLR) (8) that corresponds to the destination mobile terminal number (MSISDN), said first address information comprising the international identification number (IMSI) of the destination mobile terminal and the visitor location register (VLR) (9) in which the destination mobile terminal is currently registered, which indicates the area in which the destination mobile terminal is registered;
the HLR (8) being arranged to respond to such request from the short message service centre (5), forwarding said first address information to the short message service centre (5), said short message service centre being arranged to transmit a command to forward the SMS message to the visitor location register (VLR) (9) identified by the first address information in order that said visitor location register forwards the SMS message to the destination mobile terminal, the destination mobile terminal being arranged to acknowledge receipt of the SMS message to the short message service centre (5), whereby the short message service centre (SMSC) (5) is arranged so that, when it does not receive a corresponding acknowledgement of receipt from the destination mobile terminal, the short message service centre stores the SMS message for a certain previously established period of time, for its later automatic forwarding to the destination mobile terminal; said system of reception, storage and forwarding of SMS messages being **characterised in that** the signalling transfer point (STP) node (6) comprises
- means for storing identification data of predetermined destination mobile terminals; and
- means for detecting whether a request for first address information from a short message service centre (5) to a home location register (8) relates to a destination mobile terminal forming part of said predetermined destination mobile terminals;
the system further comprising means of short message reception (10) for receiving SMS messages directed to destination mobile terminal forming part of said predetermined destination mobile terminals, said means of short message reception comprising means of storing second address information having the same format as the first address information but corresponding to the address of the respective means of short message reception (10),
the signalling transfer point (STP) (6) node being arranged to detect whether a request for first address information from a short message service centre (5) to a home location register relates to a destination mobile terminal forming part of said predetermined destination mobile terminals, and,
- if it does not relate to a destination mobile terminal forming part of said predetermined destination mobile terminals, to direct said request to the corresponding home location register (8); but
- if it relates to a destination mobile terminal forming part of said predetermined destination mobile terminals, to direct said request to the corresponding means of short message reception (10);
the means of short message reception (10) further comprising at least one processing module (17) arranged for forwarding, upon receipt of said request, the second address information to the short message service centre (SMSC) (5), in order that the short message service centre (SMSC) (5) forwards the SMS message to the means of short message reception(10) which are arranged so that the SMS message is stored in said means of short message reception (10).

2. System according to claim 1, **characterised in that** the processing module (17) is arranged to generate an acknowledgement (22a) of recept of a SMS message received from the short message service centre (SMSC) (5), to which said acknowledgement is forwarded.

3. System according to claim 1, **characterised in that** the signalling transfer point (STP) node (6) has means for detection of a command made from the means of short message reception (10), to allow access thereof to a home location register (HLR) (8) from which, based on the destination mobile terminal number (MSISDN) of a destination mobile terminal corresponding to said predetermined destination mobile terminals, the means of short message reception (10) obtains the first address information corresponding to said destination mobile terminal, in order to generate a command to forward the SMS message to the visitor location register (VLR) (9) defined in said first address information, said visitor location register being arranged to forward the SMS message to said destination mobile terminal.

4. System according to claim 3, **characterised in that** the means for detection of a command made from the means of short message reception (10) also comprises means for detection of a command made from the short message service centre (5), to allow access thereof to a home location register (HLR) (8) or to the means of short message reception.

5. System according to claim 3, **characterised in that** the means for detection of a command made from the means of short message reception, the means for detection of a command made from the short message service centre (5), and the means for storage of predetermined destination mobile terminals, are determined by a module for obtaining the originating number and the destination number (MSISDN or IMSI) (11), a consultation module (12) arranged to access a database (13) so as to obtain, by means of an answer module (14), a destination address that is delivered to a routing module (15) arranged to set up the desired connection by means of said destination address.

6. System according to claim 1, **characterised in that** the means of short message reception (10) also comprise storage means (18) for passwords associated with the destination mobile terminal number (MSISDN) of each destination mobile terminal of said predetermined destination mobile terminals, and an electronic mail interface (19), to allow the user of the respective destination mobile terminal to access the stored SMS messages.

7. System according to claim 6, **characterised in that** the access of a destination mobile terminal of said predetermined destination mobile terminals to the stored SMS messages, is carried out from the terminal itself by means of a data download protocol.

8. System according to claim 6 or 7, **characterised in that** the access of a destination mobile terminal of said predetermined destination mobile terminals to the stored SMS messages, is carried out from a processor equipped with an electronic mail protocol support interface.

9. System according to any of the preceding claims when depending on claim 6, **characterised in that** the means of storing second address information and the means of storage of the passwords associated with the destination mobile terminal numbers (MSISDN), are determined by at least one database (18) in which the SMS messages are also stored.

10. System according to any of the preceding claims, **characterised in that** the means of short message reception (10) comprise an interface (16) with the mobile telephony network for communication with the short message service centre (SMSC) (5), the signalling transfer point (STP) node (6) or with a destination mobile terminal corresponding to said predetermined destination mobile terminals.

11. System according to claims 9 and 10, **characterised in that** the processing module (17) is connected at least to the database (18) and to the interface (16) with the mobile telephony network to set up the communications over the mobile communications network and to store and to access the SMS messages.

12. System according to claim 1, **characterised in that** the processing module is arranged to encrypt the SMS messages before they are forwarded.

## Patentansprüche

1. System für das Empfangen, Speichern und Weiterleiten von SMS-Nachrichten (SMS = Short Message Service = Kurznachrichtendienst), das eine SMS-Zentrale (5) (SMSC = Short Message Service Centre = Kurznachrichtendienstzentrale) umfaßt, durch die SMS-Nachrichten von einem mobilen Ursprungsendgerät (1) oder aus dem Intemet über ein Mobilfunknetz und eine Web-Schnittstelle (4) zu einem mobilen Zielendgerät (2) weitergeleitet. werden,
wobei die SMS-Zentrale (5) angeordnet ist, um über einen STP-Netzknoten (6) (STP = Signalling Transfer Point = Zeichengabe-Transferpunkt) bei Empfang einer SMS-Nachricht zusammen mit einer entsprechenden, ein mobiles Zielendgerät identifizierenden Nummer (MSISDN = Mobile Subscriber ISDN = ISDN-Mobilrufnummer) erste Adreßinformationen aus einer Heimatdatei (8) (HLR = Home Location Register) anzufordern, die der Nummer des mobilen Zielendgerätes (MSISDN) entsprechen, wobei die ersten Adreßinformationen die internationale Identifikationsnummer (IMSI = International Mobile Subscriber Identity = internationale Mobilteilnehmerkennung) des mobilen Zielendgerätes und die Besucherdatei (9) (VLR = Visitor Location Register) enthalten, in der das mobile Zielendgerät gerade registriert ist, was das Gebiet angibt, in dem das mobile Zielendgerät registriert ist,
wobei die HLR (8) angeordnet ist, um auf eine solche Anforderung von der SMS-Zentrale (5) zu antworten, und die ersten Adreßinformationen an die SMS-Zentrale (5) weiterleitet, die SMS-Zentrale angeordnet ist, um einen Befehl für das Weiterleiten der SMS-Nachricht an die von den ersten Adreßinformationen identifizierte Besucherdatei (VLR) (9) zu übertragen, damit die Besucherdatei die SMS-Nachricht an das mobile Zielendgerät weiterleitet, das mobile Zielendgerät angeordnet ist, um der SMS-Zentrale (5) den Empfang der SMS-Nachricht zu bestätigen, wobei die SMS-Zentrale (SMSC) (5) angeordnet ist, damit sie, wenn sie von dem mobilen Zielendgerät keine entsprechende Bestätigung für den Empfang erhält, die SMS-Nachricht zu ihrer späteren automatischen Weiterleitung an das mobile Zielendgerät für einen bestimmten, vorher festgelegten Zeitraum speichert, wobei das System für das Empfangen, Speichern und Weiterleiten von SMS-Nachrichten **dadurch gekennzeichnet ist, daß**
der STP-Knoten (6) folgendes umfaßt;
- Mittel für das Speichern von Identifikationsdaten von vorgegebenen mobilen Zielendgeräten und
- Mittel für das Erfassen, ob eine Anforderung erster Adreßinformationen von einer SMS-Zentrale (5) an eine Heimatdatei (8) ein mobiles Zielendgerät betrifft, das zu den vorgegebenen mobilen Zielendgeräten gehört,
wobei das System weiterhin Mittel (10) für das Empfangen von Kurznachrichten umfaßt, die an das zu den vorgegebenen mobilen Zielendgeräten gehörende mobile Zielendgerät gerichtete SMS-Nachrichten empfangen, wobei die Mittel für das Empfangen von Kurznachrichten Mittel für das Speichern von zweiten Adreßinformationen umfassen, die das gleiche Format wie die ersten Adreßinformationen haben, aber der Adresse des jeweiligen Mittels (10) für das Empfangen von Kurznachrichten entsprechen,
wobei der STP-Knoten (6) angeordnet ist, um zu erfassen, ob eine Anforderung erster Adreßinformationen von einer SMS-Zentrale (5) an eine Heimatdatei ein mobiles Zielendgerät betrifft, das zu den vorgegebenen mobilen Zielendgeräten gehört, und
- die Anforderung an die entsprechende Heimatdatei (8) zu richten, wenn sie kein mobiles Zielendgerät betrifft, das zu den vorgegebenen mobilen Zielendgeräten gehört,
- die Anforderung aber an das entsprechende Mittel (10) für das Empfangen von Kurznachrichten zu richten, wenn sie ein mobiles Zielendgerät betrifft, das zu den vorgegebenen mobilen Zielendgeräten gehört,
wobei die Mittel (10) für das Empfangen von Kurznachrichten weiterhin mindestens ein Vermittlungsmodul (17) umfassen, das angeordnet ist, um bei Empfang der Anforderung die zweiten Adreßinformationen an die SMS-Zentrale (SMSC) (5) weiterzuleiten, damit die SMS-Zentrale (SMSC) (5) die SMS-Nachricht an die Mittel (10) für das Empfangen von Kurznachrichten weiterleitet, die angeordnet sind, damit die SMS-Nachricht darin gespeichert wird.

2. System nach Anspruch 1, **dadurch gekennzeichnet, daß** das Vermittlungsmodul (17) angeordnet ist, um eine Bestätigung (22a) über den Empfang einer von der SMS-Zentrale (SMSC) (5) erhaltenen SMS-Nachricht zu erzeugen, die an die SMS-Zentrale weitergeleitet wird.

3. System nach Anspruch 1, **dadurch gekennzeichnet, daß** der STP-Knoten (6) Mittel für das Erfassen eines von den Mitteln (10) für das Empfangen von Kurznachrichten ausgehenden Befehls aufweist, um diesen den Zugriff auf eine Heimatdatei (HLR) (8) zu ermöglichen, von der die Mittel (10) für das Empfangen von Kurznachrichten auf der Grundlage der Nummer eines mobilen Zielendgeräts (MSISDN), das zu den vorgegebenen mobilen Zielendgeräten gehört, die dem mobilen Zielendgerät entsprechenden ersten Adreßinformationen erhalten, um einen Befehl für das Weiterleiten der SMS-Nachricht an die in den ersten Adreßinformationen definierte Besucherdatei (VLR) (9) zu erzeugen, wobei die Besucherdatei angeordnet ist, um die SMS-Nachricht an das mobile Zielendgerät weiterzuleiten.

4. System nach Anspruch 3, **dadurch gekennzeichnet, daß** die Mittel für das Erfassen eines von den Mitteln (10) für das Empfangen einer Kurznachricht ausgehenden Befehls auch Mittel für das Erfassen eines von der SMS-Zentrale (5) ausgehenden Befehls umfaßt, um diesen den Zugriff auf eine Heimatdatei (HLR) (8) oder auf die Mittel für das Empfangen einer Kurznachricht zu ermöglichen.

5. System nach Anspruch 3, **dadurch gekennzeichnet, daß** die Mittel für das Erfassen eines von den Mitteln für das Empfangen einer Kurznachricht ausgehenden Befehls, die Mittel für das Erfassen eines von der SMS-Zentrale (5) ausgehenden Befehls und die Mittel für das Speichern vorgegebener mobiler Zielendgeräte von einem Modul (11) für das Beschaffen der Ursprungsnummer und der Zielnummer (MSISDN oder IMSI) bestimmt werden, wobei ein Rückfragemodul (12) angeordnet ist, um auf eine Datenbank (13) zuzugreifen und mittels eines Abfragemoduls (14) eine Zieladresse zu beschaffen, die einem Leitmodul (15) zugeführt wird, das angeordnet ist, um mit Hilfe der Zieladresse die gewünschte Verbindung aufzubauen.

6. System nach Anspruch 1, **dadurch gekennzeichnet, daß** die Mittel (10) für das Empfangen von Kurznachrichten auch Speichermittel (18) für Paßwörter umfassen, die mit der Nummer jedes mobilen Zielendgerätes (MSISDN) der vorgegebenen mobilen Zielendgeräte verbunden sind, sowie eine Textspeicherdienst-Schnittstelle (19), durch die der Benutzer des jeweiligen mobilen Zielendgerätes auf die gespeicherten SMS-Nachrichten zugreifen kann.

7. System nach Anspruch 6, **dadurch gekennzeichnet, daß** der Zugriff eines mobilen Zielendgerätes der vorgegebenen mobilen Zielendgeräte auf die gespeicherten SMS-Nachrichten mit Hilfe eines Datenherunterladeprotokolls von dem Endgerät selbst ausgeführt wird.

8. System nach Anspruch 6 oder 7, **dadurch gekennzeichnet, daß** der Zugriff eines mobilen Zielendgerätes der vorgegebenen mobilen Zielendgeräte auf die gespeicherten, SMS-Nachrichten von einem mit einer Textspeicherdienstprotokoll-Unterstützungsschnittstelle ausgerüsteten Prozessor ausgeführt wird.

9. System nach einem der vorhergehenden Ansprüche bei Abhängigkeit von Anspruch 6, **dadurch gekennzeichnet, daß** die Mittel für das Speichern von zweiten Adreßinformationen und die Mittel für das Speichern der mit den Nummern des mobilen Zielendgerätes (MSISDN) verbundenen Paßwörter von mindestens einer Datenbank (18) bestimmt werden, in der die SMS-Nachrichten auch gespeichert werden.

10. System nach einem der vorhergehenden Ansprüche, **dadurch gekennzeichnet, daß** die Mittel (10) für das Empfangen von Kurznachrichten für die Kommunikation mit der SMS-Zentrale (SMSC) (5), dem STP-Knoten (6) oder einem zu den vorgegebenen mobilen Zielendgeräten gehörenden mobilen Zielendgerät eine Schnittstelle (16) mit dem Mobiltelefonienetz umfassen.

11. System nach den Ansprüchen 9 und 10, **dadurch gekennzeichnet, daß** das Vermittlungsmodul (17) zumindest mit der Datenbank (18) und der Schnittstelle (16) mit dem Mobiltelefonienetz verbunden ist, um die Verbindungen über das Mobilfunknetz aufzubauen und die SMS-Nachrichten zu speichern und auf sie zuzugreifen.

12. System nach Anspruch 1, **dadurch gekennzeichnet, daß** das Vermittlungsmodul angeordnet ist, um die SMS-Nachrichten vor ihrer Weiterleitung zu verschlüsseln.

## Revendications

1. Système de réception, de stockage et de transfert de messages de service de messages courts (SMS), qui comprend 'un centre de service de messages courts (5) (SMSC) au moyen duquel des messages SMS sont transférés d'un terminal mobile d'origine (1) ou depuis Internet via une interface Web (4), sur un réseau de communications mobiles, à un terminal mobile de destination (2) ;
le centre de service de messages courts (5) étant agencé pour demander, via un noeud STP (6) (signalling transfer point, point de transfert de signalisation) réseau et, à la réception d'un message SMS associé à un numéro de terminal mobile de destination (MSISDN) correspondant identifiant un terminal mobile de destination, des premières informations d'adresse à partir d'un registre de localisation nominal (HLR) (8) qui correspond au numéro de terminal mobile de destination (MSISDN), lesdites premières informations d'adresse comprenant le numéro d'identification internationale (IMSI, identité internationale de l'abonné mobile) du terminal mobile de destination et l'enregistreur de localisation des visiteurs (VLR) (9) dans lequel le terminal mobile de destination est alors enregistré, qui indique la zone dans laquelle le terminal mobile de destination est enregistré ;
le HLR (8) étant agencé pour répondre à une telle demande du centre de service de messages courts (5), en transférant lesdites premières informations d'adresse au centre de service de messages courts (5), ledit centre de service de messages courts étant agencé pour transmettre une commande pour transférer le message SMS à l'enregistreur de localisation des visiteurs (VLR) (9) identifié par les premières informations d'adresse afin que ledit enregistreur de localisation des visiteurs transfère le message SMS au terminal mobile de destination, le terminal mobile de destination étant agencé pour accuser réception du message SMS au centre de service de messages courts (5), et où le centre de service de messages courts (SMSC) (5) est agencé de telle sorte que, lorsqu'il ne reçoit pas un accusé réception correspondant du terminal mobile de destination, le centre de service de messages courts stocke le message SMS pendant une période donnée préalablement établie, pour son transfert automatique ultérieur au terminal mobile de destination ; ledit système de réception, de stockage et de transfert de messages SMS étant **caractérisé en ce que**
le noeud du point de transfert de signalisation (STP) (6) comprend
des moyens pour stocker des données d'identification de terminaux mobiles de destination prédéterminés ; et
des moyens pour détecter si une demande de premières informations d'adresse à partir d'un centre de service de messages courts (5) vers un enregistreur de localisation nominal (8) concerne un terminal mobile de destination faisant partie desdits terminaux mobiles de destination prédéterminés ;
le système comprenant en outre des moyens de réception de messages courts (10) pour recevoir des messages SMS destinés au terminal mobile de destination faisant partie desdits terminaux mobiles de destination prédéterminés, lesdits moyens de réception de messages courts comprenant des moyens de stockage de secondes informations d'adresse présentant le même format que les premières informations d'adresse mais correspondant à l'adresse des moyens respectifs de réception de messages courts (10),
le noeud du point de transfert de signalisation (STP) (6) étant agencé pour détecter si une demande de premières informations d'adresse à partir d'un centre de service de messages courts (5) vers un enregistreur de localisation nominal concerne un terminal mobile de destination faisant partie desdits terminaux mobiles de destination prédéterminés, et,
si elle ne concerne pas un terminal mobile de destination faisant partie desdits terminaux mobiles de destination prédéterminés, pour diriger ladite demande vers l'enregistreur de localisation nominal (8) correspondant ; mais
si elle concerne un terminal mobile de destination faisant partie desdits terminaux mobiles de destination prédéterminés, pour diriger ladite demande vers les moyens de réception de messages courts (10) correspondant ;
les moyens de réception de messages courts (10) comprenant en outre au moins un module de traitement (17) agencé pour transférer, à la réception de ladite demande, les secondes informations d'adresse au centre de service de messages courts (SMSC) (5), afin que le centre de service de messages courts (SMSC) (5) transfère le message court aux moyens de réception de messages courts (10) qui sont agencés de sorte que le message SMS soit stocké dans lesdits moyens de réception de messages courts (10).

2. Système selon la revendication 1, **caractérisé en ce que** le module de traitement (17) est agencé pour générer un accusé (22a) de réception d'un message SMS reçu du centre de service de messages courts (SMSC) (5), auquel ledit accusé est transféré.

3. Système selon la revendication 1, **caractérisé en ce que** le noeud du point de transfert de signalisation (STP) (6) comprend des moyens de détection d'une commande exécutée à partir des moyens de réception de message court (10), pour permettre l'accès de ceux-ci à un enregistreur de localisation nominal (HLR) (8) à partir duquel, en se fondant sur le numéro du terminal mobile de destination (MSISDN) d'un terminal mobile de destination correspondant auxdits terminaux mobiles de destination prédéterminés, les moyens de réception de messages courts (10) obtiennent les premières informations d'adresse correspondant audit terminal mobile de destination, afin de générer une commande pour transférer le message SMS à l'enregistreur de localisation des visiteurs (VLR) (9) défini dans lesdites premières informations d'adresse, ledit enregistreur de localisation des visiteurs étant agencé pour transférer le message SMS audit terminal mobile de destination.

4. Système selon la revendication 3, **caractérisé en ce que** les moyens de détection d'une commande faite à partir des moyens de réception de messages courts (10) comprennent également des moyens de détection d'une commande faite à partir du centre de service de messages courts (5), pour permettre l'accès de ceux-ci à un enregistreur de localisation nominal (HLR) (8) ou des moyens de réception de messages courts.

5. Système selon la revendication 3, **caractérisé en ce que** les moyens de détection d'une commande faite à partir des moyens de réception de messages courts, les moyens de détection d'une commande faite à partir du centre de service de messages courts (5), et les moyens de stockage de terminaux mobiles de destination prédéterminés, sont déterminés par un module pour obtenir le numéro d'origine et le numéro de destination (MSISDN ou IMSI) (11), un module de consultation (12) agencé pour accéder à une base de données (13) afin d'obtenir, au moyen d'un module de réponse (14), une adresse de destination qui est fournie à un module de routage (15) agencé pour établir la connexion souhaitée au moyen de ladite adresse de destination.

6. Système selon la revendication 1, **caractérisé en ce que** les moyens de réception de messages courts (10) comprennent également des moyens de stockage (18) de mots de passe associés au numéro de terminal mobile de destination (MSISDN) de chaque terminal mobile de destination desdits terminaux mobiles de destination prédéterminés, et une interface de messagerie électronique (19), pour permettre à l'utilisateur du terminal mobile de destination respectif d'accéder aux messages SMS stockés.

7. Système selon la revendication 6, **caractérisé en ce que** l'accès d'un terminal mobile de destination desdits terminaux mobiles de destination prédéterminés, aux messages SMS stockés, est réalisé à partir du terminal lui-même au moyen d'un protocole de téléchargement de données.

8. Système selon la revendication 6 ou 7, **caractérisé en ce que** l'accès d'un terminal mobile de destination desdits terminaux mobiles de destination prédéterminés, aux messages SMS stockés, est réalisé à partir d'un processeur doté d'une interface de support de protocole de messagerie électronique.

9. Système selon l'une quelconque des revendications précédentes dépendantes de la revendication 6, **caractérisé en ce que** les moyens de stockage des secondes informations d'adresse et les moyens de stockage des mots de passe associés aux numéros de terminal mobile de destination (MSISDN) sont déterminés par au moins une base de données (18) dans laquelle les messages SMS sont également stockés.

10. Système selon l'une quelconque des revendications précédentes, **caractérisé en ce que** les moyens de réception de messages courts (10) comprennent une interface (16) avec le réseau de téléphonie mobile pour communiquer avec le centre de service de messages courts (SMSC) (5), le noeud du point de transfert de signalisation (STP) (6) ou avec un terminal mobile de destination correspondant auxdits terminaux mobiles de destination prédéterminés.

11. Système selon les revendications 9 et 10, **caractérisé en ce que** le module de traitement (17) est connecté au moins à la base de données (18) et à L'interface (16) avec le réseau de téléphonie mobile pour établir les communications sur le réseau de communications mobiles et pour stocker et pour accéder aux messages SMS.

12. Système selon la revendication 1, **caractérisé en ce que** le module de traitement est agencé pour chiffrer les messages SMS avant qu'ils ne soient transférés.
